# EUROPEAN PATENT APPLICATION

(11) **EP 1 593 871 A2**
(43) Date of publication of application: **09.11.2005**
(21) Application number: 05012859.4
(22) Date of filing: 11.04.1990
(51) Int. Cl.: F16D 65/08

(54) **Drum brake assembly**

(30) Priority: 12.04.1989 AU PJ364989
(62) Divisional of application: 00203102.9
(71) Applicant: PBR Australia Pty Ltd, East Bentleigh, Victoria 3165 (AU)
(72) Inventor: Wang, Nui, Croydon, Victoria 3136 (AU)
(74) Representative: Finnie, Peter John

(57) **Abstract**

A drum brake assembly includes a brake member (2) comprised of a substantially circular shoe (5) having a radially outer face (8) on which at least one lining (6, 7) is mounted. The shoe (5) is made from a high strength resilient material and is of substantially constant cross-section along its entire length. The brake member (2) is arranged to be diametrically expanded by actuation means (9) on the brake assembly. When the actuation means (9) is released, the resilience of the shoe material causes the shoe (5) to diametrically contract. The lining (6, 7) may be machined to a circular form prior to the brake member (2) being fitted to the brake assembly, and that machining is preferably done after the shoe (5) has been expanded a predetermined extent.

## Description

This invention relates to a drum brake assembly and more particularly to a drum brake assembly having a particular configuration of brake shoe. The invention will be described with particular reference to a drum brake assembly for use in conjunction with a disc brake, but it is to be understood that the invention has a wider application.

Drum brakes are known to have certain advantages over disc brakes, particularly in park brake applications. Those advantages include superior braking force in some situations, and, where used as a park brake, the continued application of braking force where temperature variations occur whilst the brake is on. It has been found, for example, with certain disc type park brake assemblies, that where the temperature falls after the park brake has been applied, contraction of the brake components as a consequence of the temperature fall and a reduction of coefficient of friction with temperature fall will cause a relaxation of the braking force and possibly result in a vehicle run away.

A problem, however, with prior art drum brake assemblies is that they are of complex construction and assembly, and are generally comprised of a large number of components and parts. A typical prior art drum type park brake assembly uses a total of 31 separate parts per wheel, of which there are 18 different components. Such a large number of parts results in the park brake assembly being expensive and time consuming to assemble and fix to a vehicle.

A further problem with drum type park brake assemblies when used in conjunction with disc brake assemblies is that the park brake is generally only used after the vehicle has been brought to a stop by the disc brake. Thus, the drum shoe friction linings do not become properly bedded by wearing against the inner surface of the drum as in the case where the drum brake serves the function of both service and park brakes. Unless there is a near perfect match between the diameters of the lining when the brake is applied and the drum the shoe will not properly contact the drum over its entire surface and an inferior braking force will result.

An object of this invention is to provide a drum brake which is simpler than prior art brakes, but is no less effective than prior art brakes. A further object of the invention is to provide a single shoe drum brake which is capable of providing an effective braking force without requiring in-situ bedding. A yet further object of the invention is to provide a single shoe drum brake which can operate without return springs. A further object is to provide a method of manufacturing a brake member of a single shoe drum brake.

According to the invention there is provided a drum brake assembly comprising a drum rotatable on an axis and having a radially inner surface, a support, a brake member mounted on said support and being movable relative thereto, said brake member including a high strength resilient shoe of substantially circular form having a radially outer face and at least one friction lining mounted thereto on said outer face and extending around said circular form, and actuating means which, when actuated, causes said brake member to diametrically expand such that said lining contacts said drum inner surface and thereby provides a braking action to said drum, said shoe being of substantially constant cross-sectional form along at least a major portion of its length, said cross-sectional form and the material from which said shoe is made being such that said shoe provides significant support for said lining along the entire length of said lining, the resilience of said shoe being such that when said actuating means is released said shoe diametrically contracts to move said lining out of contact with said drum inner surface. The invention extends to a method of manufacturing a brake member for a brake assembly.

An embodiment of the invention is described in detail in the following passages of the specification which refer to the accompanying drawings. The drawings, however, are merely illustrative of how the invention might be put into effect, so that the specific form and arrangement of the various features as shown is not to be understood as limiting on the invention.

In the drawings:
Figure 1 shows an exploded perspective view of a arum brake assembly according to the invention;
Figure 2 shows a cross-sectional plan view of the assembly of Figure 1;
Figure 3 shows a cross-sectional plan view of an alternative assembly according to the invention;
Figure 4 shows a cross-sectional view along line IV-IV of Figure 2;
Figure 5 shows a perspective view of apparatus for grinding a drum brake shoe; and
Figures 6a-6f show different stages in the grinding of a brake shoe according to the method of the invention.

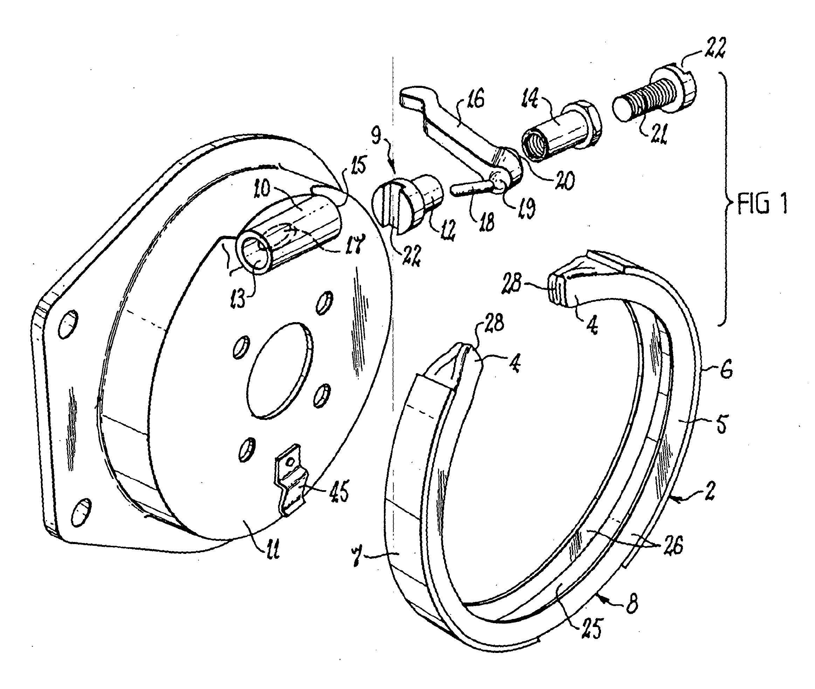

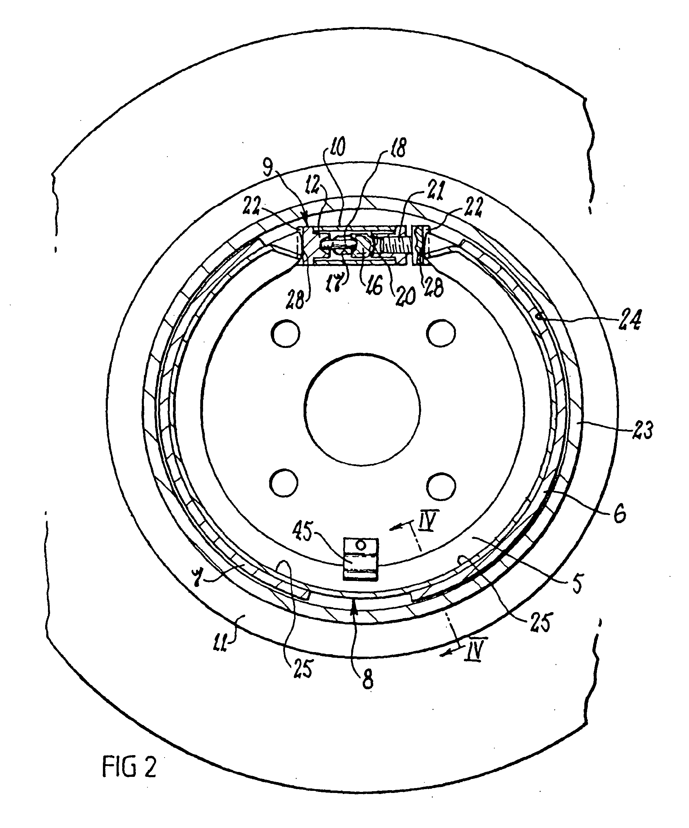

A park brake assembly as shown in Figures 1 and 2 of the drawings includes a brake member 2 which has been formed as a substantially closed circle, but with a gap being defined between the ends 4 of the brake member.

The brake member 2 is comprised of a shoe 5 and a pair of friction linings 6 and 7 adhered or otherwise fixed in known manner to the radially outer face 8 of the shoe 5. The friction linings 6 and 7 will be made of conventional material as will be known by one skilled in the art, and the shoe 5 will be formed of a resilient material such as, but not limited to, mild steel, composite materials, high strength plastics, and sintered metals.

Any appropriate mechanism can be used to move the ends 4 of the shoe 5 apart. The mechanism may, for example, be mechanical or hydraulic. As shown in Figures 1 and 2 the mechanism 9 includes a tubular sleeve 10 which is fixed to a plate like support 11 which serves to provide structure for the brake assembly and also serves as a dust cover for a disc brake assembly (not shown). The sleeve 10 thus serves as an abutment for the brake member 2. A tappet 12 locates in one end 13 of the sleeve 10, and an adjusting nut 14 locates in the other end 15 of the sleeve 10. An actuating lever 16 locates between the tappet 12 and the adjusting nut 14 and passes out of the sleeve 10 through an opening 17 in the back face thereof. A push rod 18 fits into a blind bore 19 in one end of the lever 16, and presses against the tappet 12. A knuckle 20 on the opposite side of the lever locates in a recess in the adjusting nut 14. When the lever 16 is moved in use it operates cam-like to move the tappet 12 and nut 14 apart. An adjusting screw 21 screws into the adjusting nut 14 to provide a facility for varying the effective length of the mechanism 9. The tappet 12 and screw 21 each have a groove 22 therein in which the ends 4 of the brake member 2 locate. The lever 16 thus operates in use to urge the ends 4 of the brake member 2 apart into contact with the radially inner surface 24 of a drum 23 shown in Figure 2.

The cross-section shape of the shoe 5 can be of any suitable form although it is important that the shoe is able to properly support the linings 6,7 around the entire circumference of the brake member 2. This differs from prior art band brake type arrangements in which the circumferential band is very flexible in a radial direction and does not adequately support the lining. The radial forces on the lining during braking can be very high and if the shoe distorts inwardly to even a small extent a significant area of the lining will no longer provide an adequate braking force.

However, it is also important that the shoe 5 is resiliently flexible. This differs from some prior art arrangements, such as two shoe drum brakes, where the shoe or shoes are substantially rigid. These prior art shoes require either a plurality of actuators to operate or are pivotable relative to their abutments, and require spring retractors, and are accordingly. It is this complicated requiring a large number of components to operate complicated multi-component type arrangement which the present invention seeks to improve on.

The shoe 5 depicted in Figure 1, 2 and 4 is of channel cross-sectional shape comprising a web 25, and a pair of parallel flanges 26 which connect to and are preferably integral with the lateral edges 27 of the web 25 and project radially inwardly. The flanges 26 serve to increase the bending strength of the shoe and thereby resist radially inward deflection of the shoe under braking load. The dimensions of the flanges and web will be selected according to the particular application and anticipated loads. In one example application, which is considered suitable for a motor car park brake, the shoe 5 was made of mild steel, the flanges 26 had a length of 12.5mm and a thickness of 2.5mm, and the web was 25mm wide and had a thickness of 2.5mm. A mild steel shoe will have sufficient resilience to retract the linings 6,7 out of contact with the inner surface of the drum after the brake has been applied. Clearly, other shoe configurations are possible, and specifically envisaged is a T-shaped shoe having the leg of the T-shape projecting radially inwardly to increase the bending strength of the shoe.

It is important that the shoe has some resilience, for the configuration of the shoe is such that it acts as a spring in reducing the diameter of the shoe after the actuating mechanism 9 has been released. The spring force required can be derived from the sectional dimensions of the shoe 5. Thus, no additional springs are necessary in order to retract the brake. It is not, however, essential that the shoe be made from high strength spring type material. It is, however, important that even if the shoe 5 is stressed so that the shoe material reaches its yield point, or beyond, the material will still have sufficient resilience to cause the shoe to retract out of engagement with the drum against which it bears under braking conditions. Thus it is envisaged that the shoe may be made from a mild steel material which is relatively inexpensive but which will provide sufficient resilience for the brake to operate and retract. In some applications it may be advantageous to also include retracting springs.

To assure that the brake member 2 operates effectively, and all components are tightly held in position after assembly, it is envisaged that the diameter of the shoe 5 as manufactured will be smaller than the diameter of the shoe when assembled in the brake-off position. Thus, to assemble the brake it will be necessary to radially expand the shoe 5 to move the ends 4 apart against the action of the shoe resilience so that, when assembled, the spring force in the shoe material will hold the brake components in an assembled and brake-off condition.

It is desirable that the shoe 5 has a substantially constant cross-sectional shape along its entire length. This is desirable because the manufacture of the shoe can then be effected by simply cutting individual shoes from a length of constant cross-section material of suitable dimensions, and then bending those cut lengths into their circular form. Clearly it will not then be necessary to fabricate the shoe from various parts as has heretofore been the norm. Where the radius of the shoe is small it may be necessary to treat the flange or flanges during the bending process to ensure that there is no crimping or bending of the flanges, but this would be a non-complicated manufacturing technique which could be rapidly carried out on a mass production line.

The ends 4 of the shoe are preferably crimped into an M-shape as depicted at numeral 28 in Figure 1 to provide a suitable end formation which will fit into the grooves 22 in the actuating mechanism 9. The crimping of the ends 4 as shown will provide an effective yet simple method of forming the ends so that force transmitted by the actuating mechanism 9 will be transmitted to the shoe substantially along the longitudinal axis of the shoe. It will, however, be appreciated that it will be possible to provide contact points on the shoe which the actuating mechanism will engage which are spaced away from the ends 4.

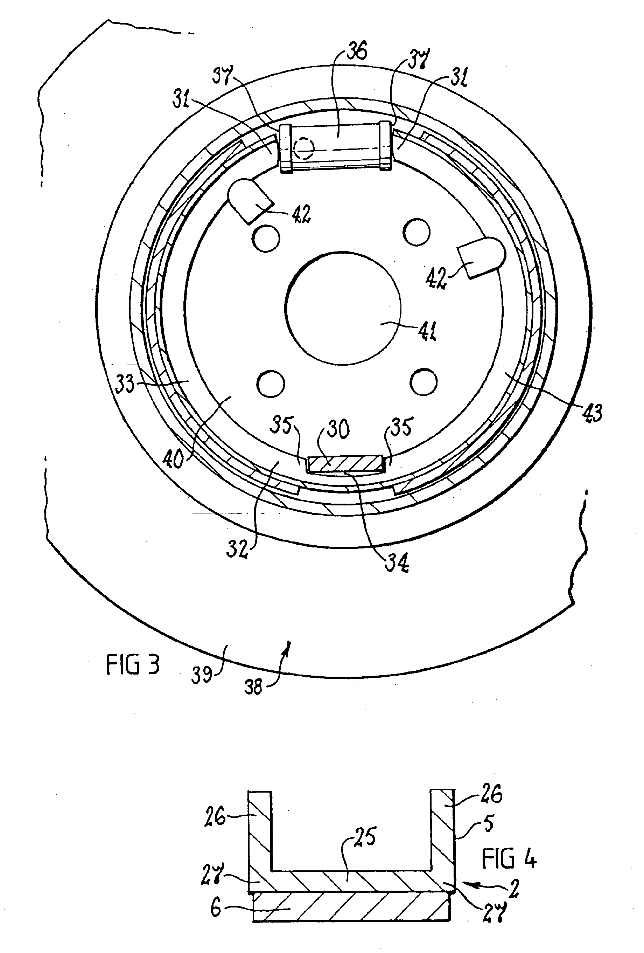

It will be possible for there to be an alternative position for the reaction or abutment point. In the embodiment shown in Figure 3 of the drawings an abutment arm 30 is located midway between the ends 31 of the shoe 32 and can be compared with a conventional "leading-trailing" shoe arrangement. The flanges 33 of the shoe 32 may, for this purpose, each have a rectangular seat 34 cut out of them and the abutment arm may fit neatly into the seats so formed in order to provide anabutment point. End faces 35 at each end of the seat 34 contact the abutment arm 30. In this arrangement the shoe will be substantially free, pivoting relative to the abutment arm 30, as well as possessing the necessary resilience to retract the shoe from its brake-on condition. The actuating mechanism in this application is a hydraulic piston and cylinder assembly 36 and the ends 31 have been rounded to provide contact points which end faces 37 of the piston and cylinder assembly 36 engage. An adjuster mechanism (not shown) will also generally be included in the actuating mechanism.

As previously mentioned, it is preferred that the shoe will be of uniform cross-section over substantially its entire length, but it is not essential that this be so. For example, in certain applications it may be desirable to have a reduced bending strength at a specific zone along the length of the shoe, and the shoe may have a reduced cross-section at that zone. However, for simplicity of manufacture it is preferred that the shoe is of uniform cross-section.

The single brake member according to the invention can be used as both a service and a park brake. Figure 3 shows this configuration. It may be advantageous to secure the shoe 32 to the backing plate or dust shield which protects the inboard side of the disc (not shown). Where a dust shield 38 is provided that shield may have an annular disc portion 39 which is coaxial and face to face with the inboard side of the disc, and a central hub portion 40 having a central opening 41 through which the wheel axle (not shown) passes. The shoe 32 may be mounted to the central hub portion 40 in any convenient way. In the preferred method of mounting the hub portion 40 has a plurality of spring clips 42 integrally formed therewith, and those clips 42 engage the inboard flange 43 of the shoe 32 to hold the shoe in position. The manner of engagement is such that the shoe is able to move relative to the hub parallel to the face of the hub under normal braking conditions, the outer face of the inboard flange 43 sliding on the face of the hub 41.

Optionally a wear shim (not shown) may be interposed between the flange and shoe to facilitate that movement. The spring clips 42 may be formed in any convenient way although it is envisaged they will each take the form of a tab punched out of the hub plate material and remaining joined to the hub along a radially inner edge of the tab. The natural resilience of the hub plate material will provide the spring force for the clips 42. Alternatively, and as shown in Figure 1, a conventional separate hold down spring 45 can be used.

Clearly a simple one piece shoe has other advantages besides just a reduction in the number of components. One of those advantages is that the entire radially outer surface of the lining or linings may be easily machined or ground to ensure the surface is of a true and correct circular configuration. A single machining operation is all that will be required as opposed to the separate operations required for brake assemblies having two shoes. The linings of band brakes are not able to be properly machined since they are too flexible and their circumference is defined by the manner in which they are mounted in the brake assembly.

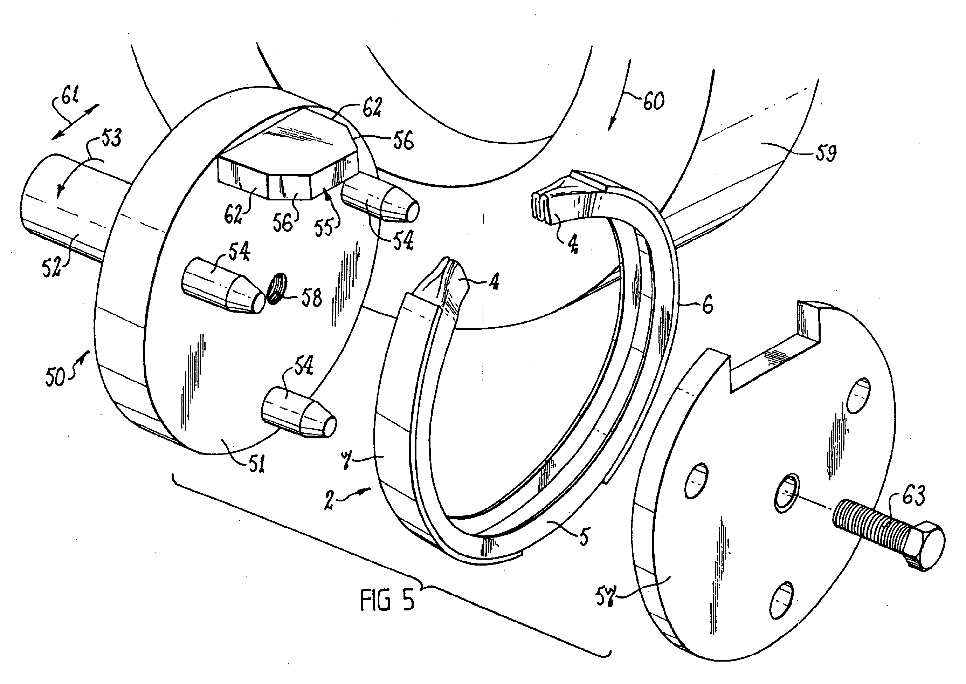

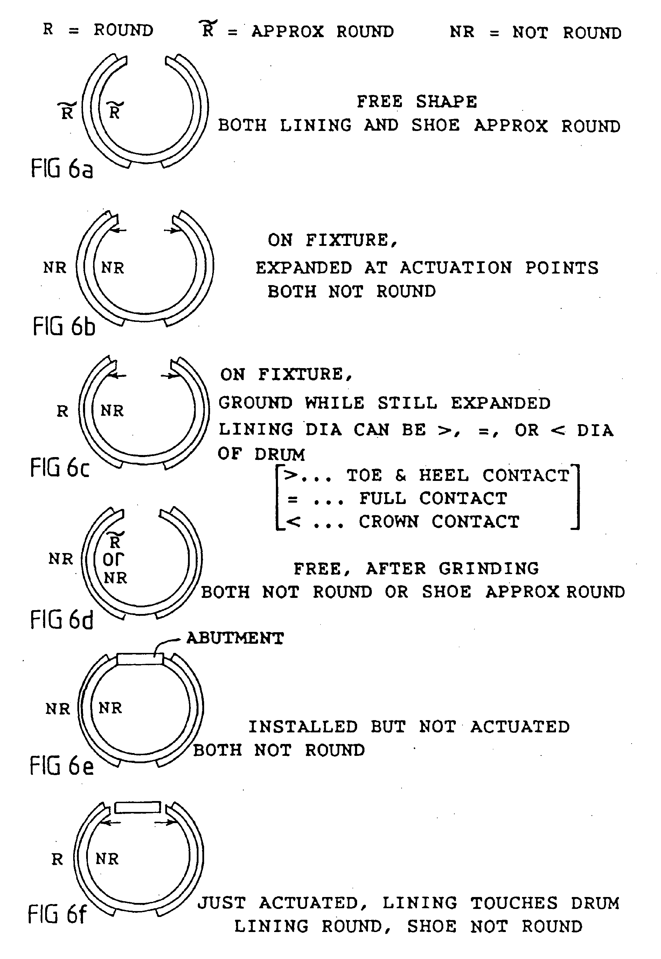

Turning now to Figures 5 and 6 of the drawings, the method of forming a brake member according to the invention will be described in detail with reference to those drawings. As shown, apparatus is used comprising a jig 50 which is in the form of a wheel 51 rotatable on a shaft 52 in the direction of arrow 53. The wheel carries three locating or centralizing pins 54 which serve to hold the brake member 2 on the wheel 51. A shoe expanding block 55 is fixed to the wheel and that block 55 has two tapered surfaces 56 which serve to expand the brake member when it is positioned on the wheel. Thus, the width of the block 55, between contact faces 62, serves to define the extent to which the ends 4 of the brake member 2 are forced apart. A clamping plate 57 is provided for clamping the brake member 2 to the wheel and a bolt 63, which screws into an axial threaded bore 58 in the wheel holds the plate 57 to the wheel. An annular grinding wheel 59 is rotatable in the direction of arrow 60, and the axis of rotation of the grinding wheel is 90° to the axis of rotation of the jig 50. The jig 50 is movable into or out of contact with the grinding wheel in the direction of arrow 61.

The width of the block 55 is selected such that when the brake member 2 is positioned on the jig 50 the brake member is expanded such that the outer surface of the un-machined linings 6, 7 are at a diameter slightly larger than the internal diameter of the drum with which the brake member is to be used, and the shoe is in its "just touching the drum" position.

It is considered important, that the contact faces 62 contact the ends 4 of the brake member 2 at or near the point where the actuating mechanism of the brake assembly will in use contact the brake member 2. This is so that the brake member 2 adopts its in use form during the grinding process. In some situations it may be possible to use the pins 54 to effect the expansion of the shoe and to omit the block 55.

Turning specifically to Figures 6 of the drawings, the steps in the grinding process are depicted diagrammatically. The meaning of the symbols shown on the drawings are as follows:
NR means "not round"
R means "round"
R means "approximately round"

As shown in these drawings the shoe 5 and linings 6 and 7 are not drawn to scale to simplify the description.

In Figure 6a the shoe 5 and linings are both approximately round. This is the condition the brake member is in prior to grinding. Figure 6b depicts the brake member 2 after it has been fixed to the jig, but prior to grinding. Both linings 6,7 and shoe 5 are not round in this condition, but the shoe is expanded to its in use position in which the linings would just be touching the inner surface of the drum if they were ground.

Figure 6c depicts the brake member 2 after grinding has been completed whilst the brake member is still held on the jig, The outer surfaces of the linings 6 and 7 are now round, whilst the shoe 5 is not round. The ground diameter of the outer surface of the linings 6 and 7, with the shoe mounted to the jig, can be greater than, the same as, or less than, the diameter of the drum inner surface with which the brake member is to be used. If the diameter of the linings in this expanded condition is greater than the drum surface the resultant brake action in use will be a "heel and toe" contact which may be desirable in some applications. If the lining is ground to the same diameter as the drum surface there will be full contact between the lining and the drum as the brake is applied. If the lining is ground to a diameter which is less than the diameter of the drum surface there will be a crown contact between the linings and the drum when the brake is applied. The usual ground diameter will be the same as the drum inner surface diameter, but it should be noted that a greater or lesser diameter could be selected for certain applications.

Figure 6d depicts the brake member after it has been removed from the jig but before installation in the brake assembly. In this condition the shoe 5 is approximately round (or not round if it has been stressed beyond the yield point of the shoe material) and the linings outer surfaces are not round.

Figure 6e depicts the brake member in its installed condition in which the ends 4 of the brake member are held apart to an extent by an abutment. In this condition both shoe and linings are not round.

In Figure 6f the brake member 2 has been expanded into touching contact with the drum inner surface and the radially outer faces of the linings 6,7 are now round, whilst the shoe 5 is not round. Thus, there is optimum contact between the radially outer faces of the linings 6,7 and the drum immediately the linings contact the drum surface. No bedding of the linings to the drum is required and full braking force will thus be applied as soon as the brake is fully applied. The linings of the brake members shown in Figures 1 to 4 of the drawings will have been ground in like manner prior to being installed in the brake assemblies depicted in those drawings.

The single shoe arrangement described above can be employed in both service brake and park brake applications. Also, it will be possible to incorporate an automatic brake adjustment mechanism should this be deemed desirable for any particular application. The term "single shoe" as used in this specification means a shoe which operates as a single unit. Clearly the shoe may itself be formed from two or more shoe components, joined together permanently or temporarily, which act substantially as a single unit.

## Claims

1. A drum brake assembly comprising:
a drum (23) rotatable about an axis and having an inner cylindrical surface (24) which forms a braking surface, a support (11), a brake member (2) of generally circular loop form, means (12, 21, 30, 42, 45) mounting said member (2) on said support (11) and permitting said member (2) to move relative to said support (11) to adopt either an inoperative configuration at which an outer surface of said member (2) does not engage said braking surface (24) or an operative configuration at which said outer surface engages said braking surface (24), said mounting means (12, 21, 30, 42, 45) including abutment means (12, 21, 30) attached to said support (11) and operative to hold said member (2) against rotation with said drum (23), said member (2) including a shoe (5) having two separate and opposed ends (4) and at least one section of friction lining (6, 7) attached to said shoe (5) and forming said outer surface, actuating means (9) positioned between said ends (4) and being operable to enlarge the separation between said ends (4) and thereby cause radial expansion of said member (2) such that it adopts said operative configuration, and said shoe (5) being able to function as a return spring when said member (2) is in the operative configuration to return said member (2) to said inoperative configuration when said actuating means (9) ceases to be operable to enlarge said separation between said ends (4), wherein said shoe (5) is formed of channel shaped material having a web (25) and a pair of parallel flanges (26) extending from lateral edges (27) of said web (25), said friction lining (6, 7) is mounted on the radially outer face of said web (25), the lateral spacing between said flanges (26) is reduced at each said end (4) so as to thereby reduce the width of said shoe (5) at each said end (4), said outer surface has a non-uniform radius of curvature along the circumference thereof when the member (2) is in the inoperative configuration and has a uniform radius of curvature when the member (2) is in the operative configuration, and said uniform radius of curvature is substantially equal to the radius of curvature of said braking surface (24).

2. An assembly according to claim 1, wherein said web (25) is folded at each said end (4) so as to substantially fill the space between said flanges (26).

3. An assembly according to claim 2, wherein said web (25) is folded at a location substantially midway between said flanges (26), and the transverse face of the shoe (5) is formed by four thicknesses of the shoe material arranged side by side.

4. An assembly according to any one of the preceding claims, wherein said lining (6, 7) is subjected to a material removal process after being attached to said shoe (5) and while said shoe (5) is held in a radially expanded and resiliently distorted condition so as to thereby form said uniform radius of curvature, and said shoe (5) is constructed so as to be sufficiently rigid to resist further distortion of curvature during said material removal process and when the brake assembly is operative.

5. An assembly according to any one of the preceding claims, wherein said shoe (5) is of substantially uniform cross-sectional size and shape throughout the major part of its circumferential length.

6. A drum brake assembly according to claim 5, wherein a recess (34) is formed in each said flange (26) in substantially diametrically opposed relationship to the space between said ends (4).

7. An assembly according to any one of the preceding claims, wherein said mounting means (12, 21, 30, 42, 45) permits both said ends (4) to move in a corresponding manner relative to said drum (23) during movement of said shoe (2) between said two configurations.

8. An assembly according to claim 7, wherein said movement of the ends (4) includes movement away from and towards the axis of rotation of said drum (23).

9. A brake member for a drum brake assembly, comprising:
a shoe (5) of generally circular loop form which has two separate and opposed ends (4), at least one section of friction lining (6, 7) attached to said shoe (5) and forming an outer surface of said member (2), said member (2) being radially expandable from an inoperative configuration to an operative configuration at which said outer surface is engageable with a cylindrical braking surface (24) of a rotatable drum forming part of said brake assembly when said brake member is in use, and said shoe (5) functioning as a return spring when said member (2) is in the operative configuration to return said member (2) to said inoperative configuration in the absence of a force preventing that return, wherein said shoe (5) is formed of channel shaped material having a web (25) and a pair of parallel flanges (26) extending from lateral edges (27) of said web (25), said friction lining (6, 7) is mounted on the radially outer face of said web (25), the lateral spacing between said flanges (26) is reduced at each said end (4) so as to thereby reduce the width of said shoe (5) at each said end (4), said outer surface has a non-uniform radius of curvature along the circumference thereof when the member (2) is in the inoperative configuration and has a uniform radius of curvature when the member (2) is in the operative configuration, and said uniform radius of curvature is substantially equal to the radius of curvature of said braking surface (24).

10. A brake member according to claim 9, wherein said lining (6, 7) is subjected to a material removal process after being attached to said shoe (5) and while said shoe (5) is held in a radially expanded and resiliently distorted condition so as to thereby form said uniform radius of curvature, and said shoe (5) is constructed so as to be sufficiently rigid to resist further distortion of curvature during said material removal process and when the brake assembly is operative.

11. A brake member according to claim 9 or claim 10, wherein said web (25) is folded at each said end (4) so as to substantially fill the space between the two said flanges (26) at the respective said end (4).

12. A brake member according to claim 11, wherein said web (25) is folded at a location substantially midway between said flanges (26), and the transverse face of the shoe (5) at each said end (4) is formed by four thicknesses of the shoe material arranged side by side.

13. A brake member according to any one of claims 9 to 12, wherein said shoe (5) is of substantially uniform cross-sectional size and shape throughout the major part of its circumferential length.

14. A brake member according to any one of claims 9 to 13, wherein a recess (34) is formed in each said flange (26) in substantially diametrically opposed relationship to the space between said ends (4).

15. A drum type park brake assembly including a rotatable drum (23) having an inner cylindrical surface (24), a brake member (2) having an outer drum engageable surface and two separate and opposed ends (4), and actuator means (9) operable to increase the separation between said ends (4) and thereby cause the brake member outer surface to engage with said drum inner cylindrical surface (24);
said brake member (2) being radially expandable from an inoperative condition to an operative condition by operation of said actuator means (9), so that the outer surface of said brake member (2) engages with the drum inner surface (24) to impose braking action on said drum (23) when the brake member (2) is in said operative condition, but does not so engage when the brake member (2) is in said inoperative condition;
said brake member including a high strength and resilient single-piece shoe (5) of generally circular loop form and at least one section of friction lining (6,7) attached to said shoe (5) and forming the outer surface of said brake member (2);
in the as-manufactured state of said brake member (2), the outer surface thereof is non-circular when the brake member (2) is in the inoperative condition, but is circular and has a radius corresponding substantially to the radius of said drum inner surface (24) when the brake member (2) is expanded to said operative condition;
said shoe (5) being formed of a material and having a cross-sectional shape such as to impart said high strength sufficient to resist radially inward deflection of the shoe under braking load and being such as to maintain contact between the drum inner surface (24) and substantially the entire circumferential length of the brake member (2) outer surface during said braking action;
said shoe (5) resilience being such as to function as a return spring and automatically return said brake member (2) to the inoperative condition when the actuator means (9) ceases to be operative even in the event that expansion of the shoe (5) to said operative condition stresses the shoe material beyond its yield point and such that said shoe is in a stressed state in said inoperative condition; and,
said cross-sectional shape being substantially constant over the circumferential length of said shoe (5) whereby consistent support over the length of the friction lining (6,7) is provided.

16. A park brake assembly according to claim 15, wherein said shoe (5) comprises an elongate web (25) and at least one coextending flange (26) projecting radially inwardly from said web.

17. A park brake assembly according to claim 16, wherein said shoe (5) is of channel shaped cross-sectional form and has a second said flange (26), and each said flange (26) extends inwardly from a respective one of two opposite lateral edges (27) of said web (25).

18. A park brake assembly according to claim 17, wherein said shoe (5) is of reduced width at each said end (4).

19. A park brake assembly according to claim 18, wherein said web (25) is folded at each said end (4) so as to substantially fill the space between the two said flanges (26) at the respective said end (4).

20. A park brake assembly according to claim 19, wherein said web (25) is folded at a location substantially midway between said flanges (26), and the transverse face of the shoe (5) at each said end (4) is formed by four thicknesses of the shoe material arranged side-by-side.

21. A park brake assembly according to claim 19 or claim 20, wherein a recess (34) is formed in the or each said flange (26) in substantially diametrically opposed relationship to the space between said ends (4).

22. A park brake assembly according to any one of the preceding claims, including means (12, 21, 30, 42, 45) mounting said brake member (2) on a support (11) and permitting said brake member (2) to move relative to said support (11) to adopt either said inoperative condition or said operative condition, said mounting means (12, 21, 30, 42, 45) including abutment means (12, 21, 30) attached to said support (11) and operative to hold said brake member (2) against rotation with said drum (23).

23. A park brake assembly according to claim 22, wherein said mounting means (12, 21, 30, 42, 45) permits both said ends (4) to move in a corresponding manner relative to said drum (23) during movement of said brake member (2) between said two conditions.

24. A park brake assembly according to claim 23, wherein said movement of the ends (4) includes movement away from and towards the axis of rotation of said drum (23).

25. A park brake assembly according to any one of the preceding claims, wherein said shoe (5) is made of mild steel.

26. A park brake assembly according to any one of the preceding claims, wherein the width of the section forming said shoe (5) measured in the axial direction of said drum (23), is twice the length of said section measured in the-radial direction of said drum(23).
